# EUROPEAN PATENT APPLICATION

(11) **EP 4 636 623 A1**
(43) Date of publication of application: **22.10.2025**
(21) Application number: 24171382.5
(22) Date of filing: 19.04.2024
(51) Int. Cl.: G06F 21/55, G06F 21/57, H04L 9/40

(54) **SECURE ELEMENT AND OPERATING METHOD**

(71) Applicant: NXP B.V., 5656 AG Eindhoven (NL)
(72) Inventor: Haslinger, Dorian, 5656AG Eindhoven (NL); Manninger, Marc, 5656 AG Eindhoven (NL); Khullar, Naman, 5656 AG Eindhoven (NL)
(74) Representative: Krott, Michel

(57) **Abstract**

In accordance with a first aspect of the present disclosure, a secure element is provided, comprising: a sensing unit configured to sense one or more signal characteristics, wherein said signal characteristics comprise characteristics of signals transmitted to and from components of a vehicle access system; a processing unit configured to conclude, in dependence on an output of said sensing unit, that one or more attacks are carried out on the vehicle access system. In accordance with further aspects of the present disclosure, a corresponding method of operating a secure element is conceived, and a computer program for carrying out said method is provided.

## Description

### TECHNICAL FIELD

The present disclosure relates to a secure element. Furthermore, the present disclosure relates to a corresponding method of operating a secure element, and to a computer program for carrying out said method.

### BACKGROUND

An access system for a vehicle may authenticate devices which are used to gain access to said vehicle, before it grants the access (for example, before it unlocks the vehicle). This authentication is typically performed by a secure element, which verifies the credentials provided by said devices. Another component of the access system, such as a general-purpose processor (e.g., a microcontroller), then typically takes a decision to grant access to the vehicle or not, based on a result of the verification performed by the secure element.

### SUMMARY

In accordance with a first aspect of the present disclosure, a secure element is provided, comprising: a sensing unit configured to sense one or more signal characteristics, wherein said signal characteristics comprise characteristics of signals transmitted to and from components of a vehicle access system; a processing unit configured to conclude, in dependence on an output of said sensing unit, that one or more attacks are carried out on the vehicle access system.

In one or more embodiments, the signal characteristics comprise characteristics of supply signals transmitted to said components and/or characteristics of data signals transmitted to and from said components.

In one or more embodiments, the components include at least one of a power management unit, a controller area network transceiver, a host microcontroller, and a radio frequency communication unit.

In one or more embodiments, the attacks include fault injection attacks.

In one or more embodiments, the processing unit is configured to conclude that said attacks are carried out based on a machine learning model.

In one or more embodiments, the sensing unit is configured to be coupled to said components through a dedicated signal sensing network or through a communication network between the secure element and said components.

In one or more embodiments, the processing unit is further configured to perform one or more preventive actions if said processing unit concludes that at least one of said attacks is carried out.

In one or more embodiments, the preventive actions include deactivating a host microcontroller included in the vehicle access system and/or warning a main microcontroller included in the vehicle access system.

In one or more embodiments, the processing unit is configured to perform said preventive actions during an authentication process which is carried out between the secure element and said host microcontroller.

In one or more embodiments, the secure element further comprises a storage unit configured to store attack-monitoring data, and the processing unit is configured to update said attack-monitoring data if said processing unit concludes that at least one of said attacks is carried out.

In one or more embodiments, the attack-monitoring data include an attack counter.

In one or more embodiments, a vehicle access system comprises a secure element of the kind set forth.

In accordance with a second aspect of the present disclosure, a method of operating a secure element is conceived, comprising: sensing, by a sensing unit included in the secure element, one or more signal characteristics, wherein said signal characteristics comprise characteristics of signals transmitted to and from components of a vehicle access system; concluding, by a processing unit included in the secure element, in dependence on an output of said sensing unit, that one or more attacks are carried out on the vehicle access system.

In accordance with a third aspect of the present disclosure, a computer program is provided, comprising executable instructions which, when executed by a processing unit included in a secure element, cause said processing unit to conclude that one or more attacks are carried out on a vehicle access system, in dependence on an output of a sensing unit included in the secure element, wherein the sensing unit senses characteristics of signals transmitted to and from components of the vehicle access system.

### DESCRIPTION OF DRAWINGS

Embodiments will be described in more detail with reference to the appended drawings.
Fig. 1 shows an example of a vehicle access system under attack.
Fig. 2 shows an illustrative embodiment of a secure element.
Fig. 3 shows an illustrative embodiment of a method of operating a secure element.
Fig. 4A shows an illustrative embodiment of a vehicle access system under attack.
Fig. 4B shows an illustrative embodiment of a vehicle access system under attack.
Fig. 5 shows an illustrative embodiment of a machine learning model training process.

### DESCRIPTION OF EMBODIMENTS

In secure access systems, specifically systems for gaining access to a vehicle, the decision to grant or deny access is typically taken by a general-purpose processor (e.g., a so-called "host microcontroller"), which interacts with a secure element. It is noted that a secure element may be defined as a tamper-resistant integrated circuit with installed or pre-installed applications, which have a prescribed functionality and a prescribed level of security. Furthermore, a secure element may implement security functions, such as cryptographic functions and authentication functions. A secure element is typically a certified device, for example a Common-Criteria Evaluation Assurance Level (CC EAL) 4+, 5+, 6+ or higher certified device. The secure element may verify credentials provided by an access device. Depending on the result of the verification, the general-purpose processor may then take the decision to grant or deny access to the vehicle. The general-purpose processor is less secure than the secure element, because the latter is typically a certified device which has to meet strict security requirements. Therefore, the general-purpose processor is susceptible to attacks, such as fault injection attacks and other types of attacks. Similarly, a vehicle access system may contain other components which are susceptible to attacks, such as a power management unit (PMU), a controller area network (CAN) transceiver, and a radio frequency (RF) communication unit. The latter may for example be a Bluetooth low energy (BLE) communication unit or an ultra-wideband (UWB) communication unit.

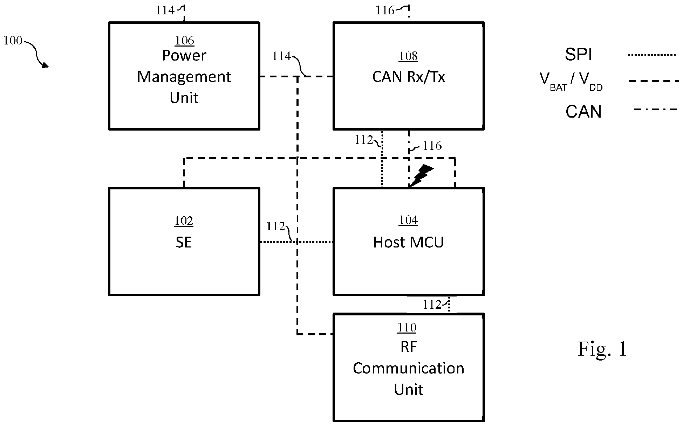

**Fig. 1** shows an example of a vehicle access system 100 under attack. In particular, a typical vehicle access system 100 is shown, comprising a secure element 102, a host microcontroller (MCU) 104, a power management unit 106, a CAN transceiver 108, and an RF communication unit 110. Serial peripheral interface (SPI) connections 112 are provided between the host MCU 104 and the CAN transceiver 108, and between the host MCU 104 and the RF communication unit 110. Furthermore, a battery supply/supply voltage connection 114 is provided as an input of the power management unit 106, which may be connected to an external power source (not shown). Further battery supply/supply voltage connections 114 are provided between the power management unit 106 and the other components of the vehicle access system, to distribute power to said components. Furthermore, a CAN connection 116 is provided as an input of the CAN transceiver 108, which may be connected to external modules of a CAN (not shown). Finally, a further CAN connection 116 is provided between the CAN transceiver 108 and the host MCU 104. In this example, an attack is performed on the host MCU 104 via the CAN connection 116 between the CAN transceiver 108 and the host MCU 104. Similarly, attacks may be performed on the other components of the vehicle access system 100, via the different types of connections 112, 114, 116 provided between these components.

Now discussed are a secure element, a corresponding method of operating a secure element, and a computer program for carrying out said method, which facilitate protecting a vehicle access system against attacks of the kind set forth above.

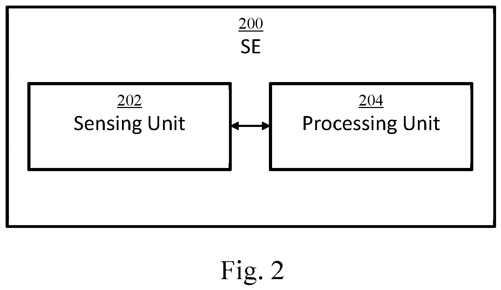

**Fig. 2** shows an illustrative embodiment of a secure element 200. The secure element 200 comprises a sensing unit 202 and a processing unit 204, which are operatively coupled to each other. The sensing unit 202 is configured to sense one or more signal characteristics, wherein said signal characteristics comprise characteristics of signals transmitted to and from components (not shown) of a vehicle access system. Furthermore, the processing unit 204 is configured to conclude, in dependence on an output of said sensing unit 202, that one or more attacks are carried out on the vehicle access system. By integrating a sensing unit and processing unit of the kind set forth into a secure element, a vehicle access system is better protected against attacks that target its components and their interconnections.

In one or more embodiments, the signal characteristics comprise characteristics of supply signals transmitted to said components and/or characteristics of data signals transmitted to and from said components. Such supply signals and data signals are typically manipulated during attacks on a vehicle access system. Thus, by sensing the characteristics of such signals and processing the sensing results, the protection of the vehicle access system against such attacks is facilitated. In one or more embodiments, the components include at least one of a power management unit, a controller area network transceiver, a host microcontroller, and a radio frequency communication unit. Such components are typically targeted during attacks on a vehicle access system. Thus, by sensing the characteristics of signals transmitted to and from these components and processing the sensing results, the protection of the vehicle access system against such attacks is facilitated.

In one or more embodiments, the attacks include fault injection attacks. Fault injection attacks are popular attacks, which are often performed on the components and interconnections of a vehicle access system. A secure element provided with a sensing unit and processing unit of the kind set forth may effectively protect a vehicle access system against such popular attacks. In one or more embodiments, the processing unit is configured to conclude that said attacks are carried out based on a machine learning model. In this way, the processing unit may learn to interpret the sensing results and to distinguish correct conclusions from false alarms, for example. Furthermore, in practical implementations, the sensing unit is configured to be coupled to said components through a dedicated signal sensing network or through a communication network between the secure element and said components.

In one or more embodiments, the processing unit is further configured to perform one or more preventive actions if said processing unit concludes that at least one of said attacks is carried out. In this way, the protection of the vehicle access system against attacks is further facilitated. In one or more embodiments, the preventive actions include deactivating a host microcontroller included in the vehicle access system and/or warning a main microcontroller included in the vehicle access system. These are particularly suitable preventive actions, which further facilitate protecting the vehicle access system against attacks. The skilled person will appreciate that the main microcontroller may for example be a so-called body control module (BCM) of a vehicle. In one or more embodiments, the processing unit is configured to perform said preventive actions during an authentication process which is carried out between the secure element and said host microcontroller. Since such an authentication process is typically already performed in a regular manner, no additional communication steps need to be implemented in order to perform the preventive actions if they are performed during such a process.

In one or more embodiments, the secure element further comprises a storage unit configured to store attack-monitoring data, wherein the processing unit is configured to update said attack-monitoring data if said processing unit concludes that at least one of said attacks is carried out. In this way, the processing unit does not need to perform the preventive actions immediately if it concludes that an attack is carried out, but it may read the attack-monitoring data at a later stage in order to perform said actions, for example during the aforementioned authentication process. In a practical implementation, the attack-monitoring data include an attack counter.

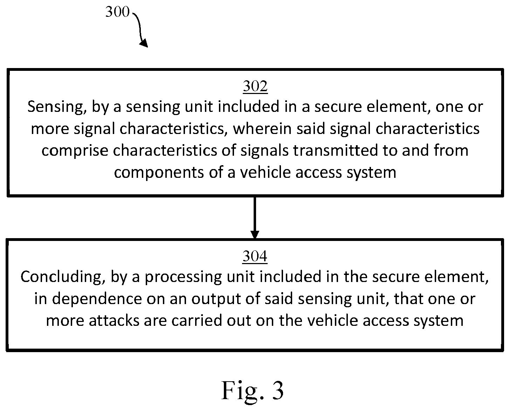

**Fig. 3** shows an illustrative embodiment of a method 300 of operating a secure element. The method 300 comprises the following steps. At 302, a sensing unit included in the secure element senses one or more signal characteristics, wherein said signal characteristics comprise characteristics of signals transmitted to and from components of a vehicle access system. Furthermore, at 304, a processing unit included in the secure element concludes, in dependence on an output of said sensing unit, that one or more attacks are carried out on the vehicle access system. As explained with reference to the corresponding secure element shown in Fig. 2, the method 300 facilitates protecting a vehicle access system against attacks.

In vehicle access systems many different levels of security requirements may exist. For example, starting from a basic microcontroller without any secure countermeasures, up to full CC EAL 6+ certified secure elements, there are many variants for implementing a car access system. An attacker may focus on the weakest part of a system and not necessarily on the highly secure, certified secure element. The presently disclosed secure element addresses this security risk, and may thus increase the overall system security level by protecting the whole environment. In particular, different signal characteristics may be sensed by the secure element during different modes of operation. In case of an attack on the environment around the secure element (e.g., on component or interconnections within the vehicle access system), these signal characteristics will be manipulated, which can be detected by the presently disclosed secure element. The secure element may then, depending on the attack scenario, apply different countermeasures, from secure logging of the attack scenario, up to deactivating of a whole component.

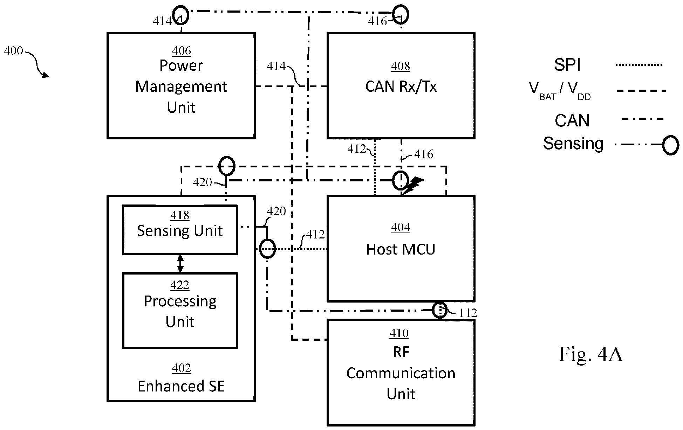

**Fig. 4A** shows an illustrative embodiment of a vehicle access system 400 under attack. In particular, an embodiment of a vehicle access system 400 is shown, comprising an enhanced secure element 402, a host MCU 404, a power management unit 406, a CAN transceiver 408, and an RF communication unit 410. SPI connections 412 are provided between the host MCU 404 and the CAN transceiver 408, and between the host MCU 404 and the RF communication unit 410. Furthermore, a battery supply/supply voltage connection 414 is provided as an input of the power management unit 406, which may be connected to an external power source (not shown). Further battery supply/supply voltage connections 414 are provided between the power management unit 406 and the other components of the vehicle access system, to distribute power to said components. Furthermore, a CAN connection 416 is provided as an input of the CAN transceiver 408, which may be connected to external modules of a CAN (not shown). Finally, a further CAN connection 416 is provided between the CAN transceiver 408 and the host MCU 404. In this embodiment, an attack is performed on the host MCU 404 via the CAN connection 416 between the CAN transceiver 408 and the host MCU 404.

The enhanced secure element 402 comprises a sensing unit 418 and a processing unit 422. The sensing unit 418 is configured to sense one or more signal characteristics, wherein said signal characteristics comprise characteristics of signals transmitted to and from components of the vehicle access system 400. More specifically, the sensing unit 418 is configured to sense characteristics of the signals transmitted through the SPI connections 412, the battery supply/supply voltage connections 414 and the CAN connections 416. Examples of characteristics of the signals transmitted through the battery supply/supply voltage connections 414 are the voltage level, frequency and spikes of said signals. Examples of the characteristics of the signals transmitted through the SPI connections 412 and the CAN connections 416 are the data, rise time and fall time, ringing and impedance of these signals. Furthermore, the processing unit 422 is configured to conclude, in dependence on an output of the sensing unit 418, that one or more attacks are carried out on the vehicle access system 400. In operation, the sensing unit 418 senses one or more characteristics of a signal transmitted through the CAN connection 416 between the CAN transceiver 408 and the host MCU 404, and produces a corresponding sensing output. Then, the processing unit 422 concludes that an attack on the host MCU 404 is carried out if the sensing output indicates that said characteristics have changed in a predefined manner, compared to a reference value of the characteristics or compared to a previously measured value of said characteristics.

More specifically, if an attack is carried out on the host MCU 404 via its CAN input/output lines 416, then this attack may be detected by the enhanced secure element 402 and logged as attack-monitoring data, which may include an attack counter. Typically, the host MCU 404 should perform an authentication process with the secure element 402 regularly, for example a time-based authentication or an interaction-based authentication. In that case, the processing unit 422 of the enhanced secure element 402 may perform one or more preventive actions during this authentication process. These preventive actions may include deactivating the host MCU 404 or sharing the attack-monitoring data with a main MCU (not shown) via the host MCU 404 and the CAN transceiver 408.

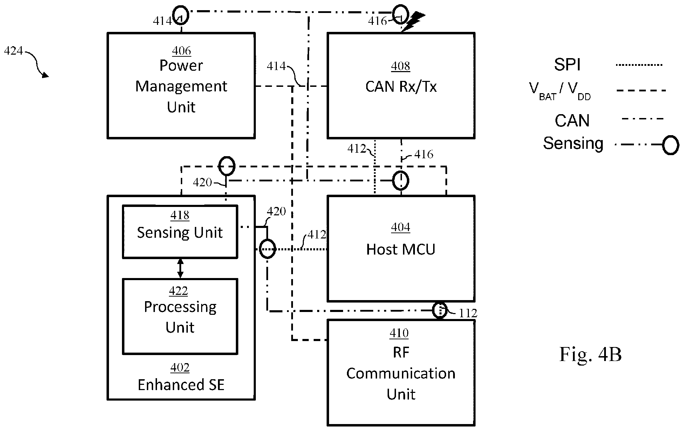

**Fig. 4B** shows an illustrative embodiment of a vehicle access system 424 under attack. In particular, an embodiment of a vehicle access system 424 is shown, comprising an enhanced secure element 402, a host MCU 404, a power management unit 406, a CAN transceiver 408, and an RF communication unit 410. SPI connections 412 are provided between the host MCU 404 and the CAN transceiver 408, and between the host MCU 404 and the RF communication unit 410. Furthermore, a battery supply/supply voltage connection 414 is provided as an input of the power management unit 406, which may be connected to an external power source (not shown). Further battery supply/supply voltage connections 414 are provided between the power management unit 406 and the other components of the vehicle access system, to distribute power to said components. Furthermore, a CAN connection 416 is provided as an input of the CAN transceiver 408, which may be connected to external modules of a CAN (not shown). Finally, a further CAN connection 416 is provided between the CAN transceiver 408 and the host MCU 404. In this embodiment, an attack is performed on the CAN connection 416 provided as an input of the CAN transceiver 408.

The enhanced secure element 402 comprises a sensing unit 418 and a processing unit 422. The sensing unit 418 is configured to sense one or more signal characteristics, wherein said signal characteristics comprise characteristics of signals transmitted to and from components of the vehicle access system 424. More specifically, the sensing unit 418 is configured to sense characteristics of the signals transmitted through the SPI connections 412, the battery supply/supply voltage connections 414 and the CAN connections 416. Examples of characteristics of the signals transmitted through the battery supply/supply voltage connections 414 are the voltage level, frequency and spikes of said signals. Examples of the characteristics of the signals transmitted through the SPI connections 412 and the CAN connections 416 are the data, rise time and fall time, ringing and impedance of these signals. Furthermore, the processing unit 422 is configured to conclude, in dependence on an output of the sensing unit 418, that one or more attacks are carried out on the vehicle access system 424. In operation, the sensing unit 418 senses one or more characteristics of a signal transmitted through the CAN connection 416 provided as an input of the CAN transceiver 408, and produces a corresponding sensing output. Then, the processing unit 422 concludes that an attack on the host MCU 404 is carried out if the sensing output indicates that said characteristics have changed in a predefined manner, compared to a reference value of the characteristics or compared to a previously measured value of said characteristics.

More specifically, if an attack is carried out on the CAN connection 416 provided as an input of the CAN transceiver 408, then this attack may be detected by the enhanced secure element 402 and logged as attack-monitoring data, which may include an attack counter. Typically, the host MCU 404 should perform an authentication process with the secure element 402 regularly, for example a time-based authentication or an interaction-based authentication. In that case, the processing unit 422 of the enhanced secure element 402 may perform one or more preventive actions during this authentication process. These preventive actions may include deactivating the host MCU 404 or sharing the attack-monitoring data with a main MCU (not shown) via the host MCU 404 and the CAN transceiver 408.

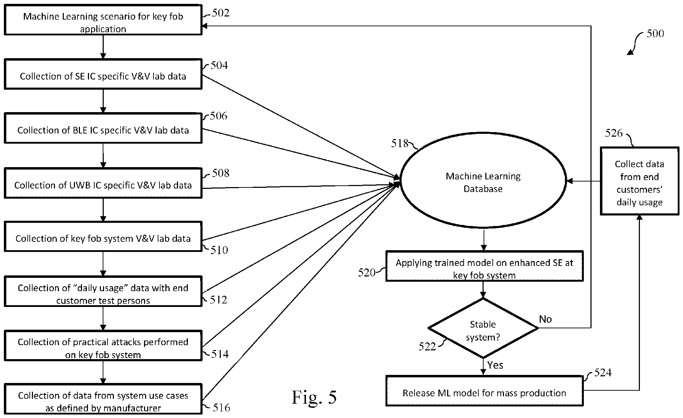

**Fig. 5** shows an illustrative embodiment of a machine learning model training process 500. Specifically, the training process 500 may be used for training an enhanced secure element of the kind set forth above, in a vehicle access system that uses a key fob to access a vehicle. The process 500 contains the following steps. After starting 500 a machine learning scenario for a key fob application, IC-specific validation and verification (V&V) lab data are collected 504, 506, 509, 510, for different components of the vehicle access system. Examples of such V&V lab data include processing times, response times, current profiles, and temperature profiles. At 512, "daily usage" data with end customer test persons are collected. Furthermore, at 514, practical attacks performed on a key fob system are collected. Furthermore, at 516, data from system use cases as defined by the manufacturer are collected. All these collected data are input into a machine learning database 518, which may be applied 520 as a trained machine learning model on the enhanced secure element in the key fob-based vehicle access system. If it is determined 522 that the system is stable, then the machine learning model may be released 524 for mass production. Subsequently, data may be collected 526 from end customers' daily usage, which may be input into the machine learning database 518. If it is determined 522 that the system is not stable, then the process returns to step 502.

More specifically, an increased system security level may be achieved by using a secure element and machine learning. The secure element may include sensing logic to monitor, for example, supply signals and communication signals. The sensing logic may be separated (i.e., forming a dedicated signal sensing network) or form part of the existing interconnections in the vehicle access system (e.g., SPI lines, supply lines). Initially, machine learning may be applied to train the device for the specific application and the required use cases. For example, if the system is a key fob-based access system, data may be collected during the validation activities on how a key fob is being used in normal life by an end customer, but also considering corner cases that occur in extensive testing. In case of an event which is considered not plausible for a normal key fob operation based on the collected and trained data, the secure element may then decide that an attack on a system level is most likely being carried out. Thus, the learning results may be used to distinguish between normal operation conditions and unwanted behavior, such as a physical attack or damage. Based on the application, the enhanced secure element may block the functionality of a module and/or report an error message to a main MCU.

The systems and methods described herein may at least partially be embodied by a computer program or a plurality of computer programs, which may exist in a variety of forms both active and inactive in a single computer system or across multiple computer systems. For example, they may exist as software program(s) comprised of program instructions in source code, object code, executable code or other formats for performing some of the steps. Any of the above may be embodied on a computer-readable medium, which may include storage devices and signals, in compressed or uncompressed form.

As used herein, the term "computer" refers to any electronic device comprising a processor, such as a general-purpose central processing unit (CPU), a specific-purpose processor or a microcontroller. A computer is capable of receiving data (an input), of performing a sequence of predetermined operations thereupon, and of producing thereby a result in the form of information or signals (an output). Depending on the context, the term "computer" will mean either a processor in particular or more generally a processor in association with an assemblage of interrelated elements contained within a single case or housing.

The term "processor" or "processing unit" refers to a data processing circuit that may be a microprocessor, a co-processor, a microcontroller, a microcomputer, a central processing unit, a field programmable gate array (FPGA), a programmable logic circuit, and/or any circuit that manipulates signals (analog or digital) based on operational instructions that are stored in a memory. The term "memory" refers to a storage circuit or multiple storage circuits such as read-only memory, random access memory, volatile memory, non-volatile memory, static memory, dynamic memory, Flash memory, cache memory, and/or any circuit that stores digital information.

As used herein, a "computer-readable medium" or "storage medium" may be any means that can contain, store, communicate, propagate, or transport a computer program for use by or in connection with the instruction execution system, apparatus, or device. The computer-readable medium may be, for example but not limited to, an electronic, magnetic, optical, electromagnetic, infrared, or semiconductor system, apparatus, device, or propagation medium.

It is noted that the embodiments above have been described with reference to different subject-matters. In particular, some embodiments may have been described with reference to method-type claims whereas other embodiments may have been described with reference to apparatus-type claims. However, a person skilled in the art will gather from the above that, unless otherwise indicated, in addition to any combination of features belonging to one type of subject-matter also any combination of features relating to different subject-matters, in particular a combination of features of the method-type claims and features of the apparatus-type claims, is considered to be disclosed with this document.

Furthermore, it is noted that the drawings are schematic. In different drawings, similar or identical elements are provided with the same reference signs. Furthermore, it is noted that in an effort to provide a concise description of the illustrative embodiments, implementation details which fall into the customary practice of the skilled person may not have been described. It should be appreciated that in the development of any such implementation, as in any engineering or design project, numerous implementation-specific decisions must be made in order to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill.

Finally, it is noted that the skilled person will be able to design many alternative embodiments without departing from the scope of the appended claims. In the claims, any reference sign placed between parentheses shall not be construed as limiting the claim. The word "comprise(s)" or "comprising" does not exclude the presence of elements or steps other than those listed in a claim. The word "a" or "an" preceding an element does not exclude the presence of a plurality of such elements. Measures recited in the claims may be implemented by means of hardware comprising several distinct elements and/or by means of a suitably programmed processor. In a device claim enumerating several means, several of these means may be embodied by one and the same item of hardware. The mere fact that certain measures are recited in mutually different dependent claims does not indicate that a combination of these measures cannot be used to advantage.

### LIST OF REFERENCE NUMBERS

- 100: vehicle access system under attack
- 102: secure element
- 104: host microcontroller
- 106: power management unit
- 108: controller area network transceiver
- 110: radio frequency communication unit
- 112: serial peripheral interface connections
- 114: battery voltage/supply voltage connections
- 116: controller area network connections
- 200: secure element
- 202: sensing unit
- 204: processing unit
- 300: method of operating a secure element
- 302: sensing, by a sensing unit included in the secure element, one or more signal characteristics, wherein said signal characteristics comprise characteristics of signals transmitted to and from components of a vehicle access system
- 304: concluding, by a processing unit included in the secure element, in dependence on an output of said sensing unit, that one or more attacks are carried out on the vehicle access system
- 400: vehicle access system under attack
- 402: enhanced secure element
- 404: host microcontroller
- 406: power management unit
- 408: controller area network transceiver
- 410: radio frequency communication unit
- 412: serial peripheral interface connections
- 414: battery voltage/supply voltage connections
- 416: controller area network connections
- 418: sensing unit
- 420: sensing network connections
- 422: processing unit
- 424: vehicle access system under attack
- 500: machine learning model training process
- 502: machine learning scenario for key fob application
- 504: collection of SE IC specific V&V lab data
- 506: collection of BLE IC specific V&V lab data
- 508: collection of UWB IC specific V&V lab data
- 510: collection of key fob system V&V lab data
- 512: collection of "daily usage" data with end customer test persons
- 514: collection of practical attacks performed on key fob system
- 516: collection of data from system use cases as defined by manufacturer
- 518: machine learning database
- 520: applying trained model on enhanced SE at key fob system
- 522: stable system?
- 524: release machine learning model for mass production
- 526: collect data from end customers' daily usage

## Claims

1. A secure element, comprising:
a sensing unit configured to sense one or more signal characteristics, wherein said signal characteristics comprise characteristics of signals transmitted to and from components of a vehicle access system;
a processing unit configured to conclude, in dependence on an output of said sensing unit, that one or more attacks are carried out on the vehicle access system.

2. The secure element of claim 1, wherein the signal characteristics comprise characteristics of supply signals transmitted to said components and/or characteristics of data signals transmitted to and from said components.

3. The secure element of claim 1 or 2, wherein the components include at least one of a power management unit, a controller area network transceiver, a host microcontroller, and a radio frequency communication unit.

4. The secure element of any preceding claim, wherein said attacks include fault injection attacks.

5. The secure element of any preceding claim, wherein the processing unit is configured to conclude that said attacks are carried out based on a machine learning model.

6. The secure element of any preceding claim, wherein the sensing unit is configured to be coupled to said components through a dedicated signal sensing network or through a communication network between the secure element and said components.

7. The secure element of any preceding claim, wherein the processing unit is further configured to perform one or more preventive actions if said processing unit concludes that at least one of said attacks is carried out.

8. The secure element of claim 7, wherein said preventive actions include deactivating a host microcontroller included in the vehicle access system and/or warning a main microcontroller included in the vehicle access system.

9. The secure element of claim 8, wherein the processing unit is configured to perform said preventive actions during an authentication process which is carried out between the secure element and said host microcontroller.

10. The secure element of any preceding claim, further comprising a storage unit configured to store attack-monitoring data, wherein the processing unit is configured to update said attack-monitoring data if said processing unit concludes that at least one of said attacks is carried out.

11. The secure element of claim 10, wherein the attack-monitoring data include an attack counter.

12. A vehicle access system comprising the secure element of any preceding claim.

13. A method of operating a secure element, comprising:
sensing, by a sensing unit included in the secure element, one or more signal characteristics, wherein said signal characteristics comprise characteristics of signals transmitted to and from components of a vehicle access system;
concluding, by a processing unit included in the secure element, in dependence on an output of said sensing unit, that one or more attacks are carried out on the vehicle access system.

14. A computer program comprising executable instructions which, when executed by a processing unit included in a secure element, cause said processing unit to conclude that one or more attacks are carried out on a vehicle access system, in dependence on an output of a sensing unit included in the secure element, wherein the sensing unit senses characteristics of signals transmitted to and from components of the vehicle access system.

## Amended claims

### Amended claims in accordance with Rule 137(2) EPC.

1. A secure element (200, 402), comprising:
a sensing unit (202, 418) configured to sense one or more signal characteristics, wherein said signal characteristics comprise characteristics of signals transmitted to and from components of a vehicle access system (400, 424),;
a processing unit (204, 422) configured to conclude, in dependence on an output of said sensing unit (202, 418), that one or more attacks are carried out on the vehicle access system (400, 424);
**characterized in that** the secure element (200, 402) is implemented as a tamper-resistant integrated circuit, and **in that** the components include at least one of a power management unit (406), a controller area network transceiver (408), a host microcontroller (404), and a radio frequency communication unit (410).

2. The secure element (200, 402) of claim 1, wherein the signal characteristics comprise characteristics of supply signals transmitted to said components and/or characteristics of data signals transmitted to and from said components.

3. The secure element (200, 402) of any preceding claim, wherein said attacks include fault injection attacks.

4. The secure element (200, 402) of any preceding claim, wherein the processing unit (204, 422) is configured to conclude that said attacks are carried out based on a machine learning model.

5. The secure element (200, 402) of any preceding claim, wherein the sensing unit (204, 418) is configured to be coupled to said components through a dedicated signal sensing network or through a communication network between the secure element (200, 402) and said components.

6. The secure element (200, 402) of any preceding claim, wherein the processing unit (204, 422) is further configured to perform one or more preventive actions if said processing unit (204, 422) concludes that at least one of said attacks is carried out.

7. The secure element (200, 402) of claim 6, wherein said preventive actions include deactivating the host microcontroller (404) included in the vehicle access system (400, 424) and/or warning a main microcontroller included in the vehicle access system (400, 424).

8. The secure element (200, 402) of claim 7, wherein the processing unit (204, 422) is configured to perform said preventive actions during an authentication process which is carried out between the secure element (200, 402) and said host microcontroller (404).

9. The secure element (200, 402) of any preceding claim, further comprising a storage unit configured to store attack-monitoring data, wherein the processing unit (204, 422) is configured to update said attack-monitoring data if said processing unit (204, 422) concludes that at least one of said attacks is carried out.

10. The secure element (200, 402) of claim 9, wherein the attack-monitoring data include an attack counter.

11. A vehicle access system (400, 424) comprising the secure element (200, 402) of any preceding claim.

12. A method of operating a secure element (200, 402), comprising:
sensing, by a sensing unit (202, 418) included in the secure element (200, 402), one or more signal characteristics, wherein said signal characteristics comprise characteristics of signals transmitted to and from components of a vehicle access system;
concluding, by a processing unit (204, 422) included in the secure element (200, 402), in dependence on an output of said sensing unit (204, 418), that one or more attacks are carried out on the vehicle access system (400, 424);
**characterized in that** the secure element (200, 402) is implemented as a tamper-resistant integrated circuit, and **in that** the components include at least one of a power management unit (406), a controller area network transceiver (408), a host microcontroller (404), and a radio frequency communication unit (410).

13. A computer program comprising executable instructions which, when executed by a processing unit (204, 422) included in a secure element (200, 402), cause said processing unit (204, 422) to conclude that one or more attacks are carried out on a vehicle access system (400, 424), in dependence on an output of a sensing unit (202, 418) included in the secure element (200, 402), wherein the sensing unit (202, 418) senses characteristics of signals transmitted to and from components of the vehicle access system; **characterized in that** the secure element (200, 402) is implemented as a tamper-resistant integrated circuit, and **in that** the components include at least one of a power management unit (406), a controller area network transceiver (408), a host microcontroller (404), and a radio frequency communication unit (410).
